# EUROPEAN PATENT APPLICATION

(11) **EP 4 501 434 A1**
(43) Date of publication of application: **05.02.2025**
(21) Application number: 23780381.2
(22) Date of filing: 27.03.2023
(51) Int. Cl.: B01D 53/14, B01D 53/62, B01D 53/80, B01J 20/02, C01F 11/18

(54) **CARBON DIOXIDE FIXATION APPARATUS AND CARBON DIOXIDE FIXATION METHOD**

(30) Priority: 28.03.2022 JP 2022052024
(71) Applicant: Nippon Concrete Industries Co., Ltd., Tokyo 108-8560 (JP); Idemitsu Kosan Co.,Ltd., Tokyo 100-8321 (JP)
(72) Inventor: HAYAKAWA Yasuyuki, Tokyo 1088560 (JP); YAGI Toshiyuki, Tokyo 1088560 (JP); YOSHIDA Hiroyuki, Tokyo 1088560 (JP); SASAKI Takeshi, Tokyo 1088560 (JP); TERAMAE Tsuyoshi, Tokyo 100-8321 (JP)
(74) Representative: Lewis Silkin LLP
(86) International application number: PCT/JP2023/012265
(87) International publication number: WO 2023/190372

(57) **Abstract**

To provide a carbon dioxide fixation apparatus and a method for fixing carbon dioxide, which can inexpensively fix carbon dioxide and also can inexpensively produce powder having carbon dioxide fixed therein in large quantities. The carbon dioxide fixation apparatus (1) includes water addition means (5) for adding water to concrete sludge (2) from which coarse aggregate and fine aggregate have been removed with stirring, supply means (11) for supplying a carbon dioxide-containing gas (G) to a first intermediate (6) which has passed through the water addition means (5), and water drain means (20) for draining water from a second intermediate (12) which has passed through the supply means (11) to produce powder containing precipitated calcium carbonate, which is calcium carbonate crystals, cement carbonatized powder in which calcium components in cement particles are carbonatized on the surface of the cement particles, and unreacted cement particles.

## Description

### Technical Field

The present invention relates to a carbon dioxide fixation apparatus and a method for fixing carbon dioxide, which produce powder from concrete sludge.

### Background Art

Carbon dioxide fixation apparatuses have been conventionally known, which allow calcium components in concrete sludge (cement slurry) generated in the concrete production process to react with carbon dioxide to obtain calcium carbonate (see e.g. PTL 1 to 3).

### Citation List

### Patent Literature

PTL 1: Patent No. 5072090
PTL 2: Patent No. 4892520
PTL 3: Japanese Laid-open Patent Publication No. 2010-76976

### Summary of Invention

### Technical Problem

In the case of the structures described in the above-described PTLs, high-purity calcium carbonate can be obtained; however, the production process is complicated, costs are needed, and an increase in production volumes is not easy. Even when calcium carbonate, in particular, has low purity, the quality required may be sufficiently satisfied depending on the uses thereof. Therefore, even if not having a higher purity than needed, calcium carbonate which can be inexpensively produced in large quantities is demanded.

The present invention has been made in view of such points, and an object thereof is to provide a carbon dioxide fixation apparatus and a method for fixing carbon dioxide, which can inexpensively fix carbon dioxide and also can inexpensively produce powder having carbon dioxide fixed therein large quantities.

### Solution to Problem

The carbon dioxide fixation apparatus according to claim 1 comprises water addition part for adding water to cement paste sludge, which is concrete sludge from which coarse aggregate and fine aggregate have been removed, with stirring to obtain a first intermediate, supply part for supplying a carbon dioxide-containing gas to the first intermediate to obtain a second intermediate, and water drain part for draining water from the second intermediate to produce powder containing precipitated calcium carbonate, which is calcium carbonate crystals, cement carbonatized powder in which calcium components in cement particles are carbonatized on the surface of the cement particles, and unreacted cement particles.

The carbon dioxide fixation apparatus according to claim 2 is the carbon dioxide fixation apparatus according to claim 1, wherein the water addition part adds water to cement paste sludge, which is concrete sludge from which coarse aggregate and fine aggregate have been removed and which has a water cement ratio of almost 1, in an amount of 4 times or more and 15 times or less the weight thereof.

The carbon dioxide fixation apparatus according to claim 3 is the carbon dioxide fixation apparatus according to claim 1 or 2, wherein the water drain part drains water from the second intermediate by the own weight of this second intermediate.

The method for fixing carbon dioxide according to claim 4 comprises a water addition step of adding water to cement paste sludge, which is concrete sludge from which coarse aggregate and fine aggregate have been removed, with stirring to obtain a first intermediate, a supply step of supplying a carbon dioxide-containing gas to the first intermediate to obtain a second intermediate, and a water drain step of draining water from the second intermediate to produce powder containing precipitated calcium carbonate, which is calcium carbonate crystals, cement carbonatized powder in which calcium components in cement particles are carbonatized on the surface of the cement particles, and unreacted cement particles.

The method for fixing carbon dioxide according to claim 5 is the method for fixing carbon dioxide according to claim 4, wherein in the water addition step, water is added to cement paste sludge, which is concrete sludge from which coarse aggregate and fine aggregate have been removed and which has a water cement ratio of almost 1, in an amount of 4 times or more and 15 times or less of the weight thereof.

The method for fixing carbon dioxide according to claim 6 is the method for fixing carbon dioxide according to claim 4 or 5, wherein in the water drain step, water is drained from the second intermediate by the own weight of this second intermediate.

### Advantageous Effects of Invention

According to the present invention, powder having carbon dioxide fixed therein, including precipitated calcium carbonate, cement carbonatized powder, and cement carbonatized unreacted powder can be inexpensively produced in large quantities.

### Brief Description of Drawings

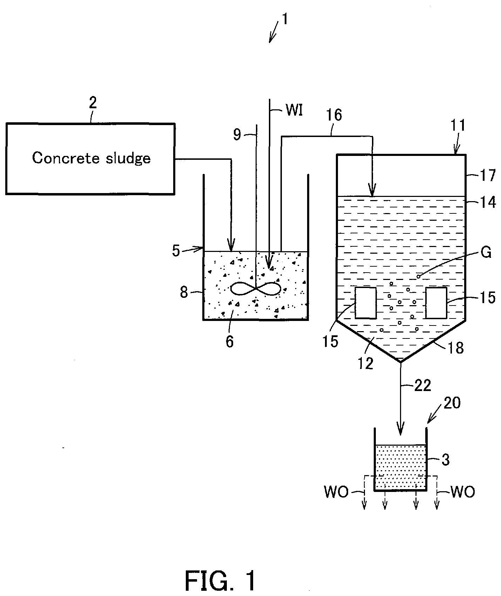

[Fig. 1] Fig. 1 is an illustration diagram showing the carbon dioxide fixation apparatus in one embodiment of the present invention.

### Description of Embodiments

One embodiment of the present invention will now be illustrated with reference to Fig. 1.

In Fig. 1, reference sign 1 denotes a carbon dioxide fixation apparatus. The carbon dioxide fixation apparatus 1 is a powder production apparatus for producing powder 3 having carbon dioxide fixed therein in a dry state using concrete sludge 2 as the raw material.

The concrete sludge 2 is concrete sludge generated when producing secondary concrete products. The secondary concrete products are products such as concrete columns and concrete piles or the like, obtained by solidifying concrete materials including cement, water, fine aggregate, coarse aggregate, and admixture. The concrete sludge 2, in particular, is generated in the centrifugal molding step when producing secondary concrete products. The concrete sludge generated in the centrifugal molding step is equal in quality to mortar sludge and even cement paste sludge. Therefore, coarse aggregate and fine aggregate are removed from the concrete sludge 2 and the powder 3. The powder 3 produced by the carbon dioxide fixation apparatus 1 of the present embodiment does not contain aggregate with a particle diameter of 0.5 mm or more (stone powder or the like). The powder 3 is carbon dioxide fixed powder having carbon dioxide fixed therein, and is also a carbon dioxide adsorbent having the function of adsorbing carbon dioxide.

The concrete sludge 2 is a highly alkaline material which abundantly contains calcium (Ca) components derived from cement. Such calcium components are components effective to adsorb carbon dioxide.

In addition, the concrete sludge 2 used in the present embodiment has a water cement ratio (W/C) of almost 1. In the concrete sludge 2, for example, the cement portion is 49.9%, water is 49.9% and the fine sand portion is 0.2% as the component ratio.

It should be noted that as the concrete sludge 2, concrete sludge generated in secondary concrete product factories, or residual concrete (residual con), or returned concrete (returned con) in ready-mixed concrete plants, from which coarse aggregate and fine aggregate are separated, may be used. That is, the concrete sludge 2 is an excess of fresh concrete in any case. The concrete sludge 2 is directly used in the normal temperature range without heating treatment and drying treatment.

The carbon dioxide fixation apparatus 1 comprises water addition means 5. The water addition means 5 adds water WI to unheated concrete sludge 2 with stirring to obtain a first intermediate 6. As an example, the water addition means 5 has a migration tank 8 and stirring means 9 provided in the migration tank 8. As the stirring means 9, for example, a rotary wing is used. As the amount of water added with respect to the weight of the concrete sludge 2 is reduced, the efficiency of the carbon dioxide adsorption amount is increased, and as the amount of water added is increased, the strength expression by a hydration reaction is suppressed. In the present embodiment, water WI in an amount of 4 times or more and 15 times or less the weight of the concrete sludge 2 is added in the water addition means 5. When the amount of water added is lower than 4 times the weight of the concrete sludge 2, the viscosity of the concrete sludge 2 is increased, and when the amount is greater than 15 times, the concentration of calcium ion is reduced. In both the cases, the efficiency of carbon dioxide adsorption is reduced. Therefore, when the amount of water added is, for example, 10 times the weight of the concrete sludge 2, cement is 5%, water is 95% and the fine sand portion is 0% as the component ratio of the first intermediate 6.

In addition, the carbon dioxide fixation apparatus 1 comprises supply means 11. The supply means 11 is directly connected to the water addition means 5, and supplies a carbon dioxide-containing gas G to the first intermediate 6 directly obtained from the water addition means 5 to obtain a second intermediate 12. As an example, the supply means 11 has a reaction tank 14 and gas supply means 15 provided in the reaction tank 14.

The reaction tank 14 is also referred to as e.g. a vertical silo, and is formed longitudinally shaped in the upper-and lower direction. From the migration tank 8 in the water addition means 5 through a discharge section 16, the first intermediate 6 is charged into the reaction tank 14 from the top thereof. In the present embodiment, the reaction tank 14 has the main body of the reaction tank 17 having the outer surface in a cylindrical shape and a diameter reduced section 18 having the outer surface in a conical shape in the upper and lower parts in an integrated manner and is placed so that the axial direction will be along the vertical direction. The main body of the reaction tank 17 is in a cylindrical shape having constant or almost constant diameter dimensions. The diameter reduced section 18 is concentrically connected to the bottom of the main body of the reaction tank 17 and the diameter thereof is reduced downward.

The gas supply means 15 allows carbon dioxide in the gas G to react with calcium components in the concrete sludge 2 to generate calcium carbonate, which fixes carbon dioxide. The gas supply means 15 has pipes connected to a gas supply source, a bulb and a nozzle or the like. The gas supply means 15 is connected to the lower part of the reaction tank 14 and ejects the gas G from the lower part of the reaction tank 14 over a predetermined time, e.g. 15 minutes or longer and 120 minutes or less. The ejection of the gas G by the gas supply means 15 may be continuous or intermittent.

As the gas G supplied from the gas supply means 15, a discharged gas from a gas supply source such as a boiler or power plant or the like is suitably used. This gas G includes 5% or more and 25% or less of carbon dioxide as an example.

The carbon dioxide fixation apparatus 1 further includes water drain means 20. The water drain means 20 directly obtains the second intermediate 12 from the supply means 11, and drains water from this second intermediate 12 to produce the powder 3. In the present embodiment, the water drain means 20 drains water from the second intermediate 12 by the own weight of the second intermediate 12 (natural dewatering) . That is, the water drain means 20 of the present embodiment does not include any power and heat source or the like, and is not driven. As the water drain means 20, for example, a flexible intermediate bulk container or the like is suitably used. That is, the water drain means 20 is formed into the shape of a bag using unwoven fabric including chemical fiber or the like, retains the powder 3 in the inside thereof, and also discharges water WO or the like having smaller particles than those of the powder 3 from the bottom and the surrounding part. The second intermediate 12 guided from the guiding section 22 at the bottom of the reaction tank 14 in the supply means 11 to the outside of the reaction tank 14 is supplied to the water drain means 20. It should be noted that the powder 3 produced may be forcedly dried in the water drain means 20 depending on the uses thereof.

Subsequently, the method for fixing carbon dioxide by the carbon dioxide fixation apparatus 1 of the present embodiment (method for producing the powder 3) will be illustrated.

First, the concrete sludge 2 is introduced into the migration tank 8 in the water addition means 5. A predetermined amount of the concrete sludge 2 is introduced into the migration tank 8, and a predetermined amount of water WI is added to the concrete sludge 2 in the migration tank 8 with stirring by the stirring means 9 in the water addition means 5 to obtain the first intermediate 6. This water addition step (water addition and stirring step) is performed at normal temperature.

Subsequently, this first intermediate 6 is introduced into the reaction tank 14 in the supply means 11 from the top thereof via the discharge section 16. In the supply means 11, the carbon dioxide-containing gas G is supplied with pressure to the first intermediate 6 in the reaction tank 14 by the gas supply means 15, and calcium components contained in the first intermediate 6 react with carbon dioxide by the function of adsorbing carbon dioxide of the concrete sludge 2 contained in the first intermediate 6 (DAC (Direct Air Capture) function) to generate calcium carbonate, which causes carbon dioxide fixation in the first intermediate 6.

By the operation of the carbon dioxide fixation apparatus 1 for a predetermined time, a second intermediate 12 in which carbon dioxide has been adsorbed to the concrete sludge 2 is produced in the reaction tank 14. After this, the second intermediate 12 is introduced into the water drain means 20 via the guiding section 22 of the reaction tank 14 in the supply means 11 and the water WO is removed by the water drain means 20 to produce the powder 3. The water content of the powder 3 produced through the water drain means 20 is within a range from 4% or more and 40% or less, and can be set depending on the uses of the powder 3.

The produced powder 3 is a composite powder having carbon dioxide fixed therein with a particle diameter of 1 um or more and 50 um or less, including three types of powder, precipitated calcium carbonate, cement carbonatized powder, and cement carbonatized unreacted powder. It should be noted that a very small amount of the fine sand portion is contained in the powder 3; however, it can be substantially ignored as the component ratio. Precipitated calcium carbonate is calcium carbonate crystals generated when calcium components migrating from cement particles to water react with carbon dioxide. Cement carbonatized powder is a powder in which calcium components in cement particles react with the introduced carbon dioxide to fix carbon dioxide (carbonatize) as calcium carbonate on the particle surface thereof or the like. The cement carbonatized unreacted powder is powder in which the above does "not react" i.e. cement particles (unreacted sludge) themselves in the present embodiment.

As the component ratio of precipitated calcium carbonate, cement carbonatized powder and cement carbonatized unreacted powder in the produced powder 3, the precipitated calcium carbonate is 2%, the cement carbonatized powder is 94% or more and the cement carbonatized unreacted powder is 4% or less. In addition, as the weight ratio of carbon dioxide components by the carbon dioxide adsorption reaction, the precipitated calcium carbonate is 44 wt%-CO₂, the cement carbonatized powder is 25 wt%-CO₂, and the cement carbonatized unreacted powder is 1 wt%-CO₂. Therefore, the carbon dioxide fixed weight per unit weight of the powder 3 corresponds to 24.4 wt%.

It should be noted that the produced powder 3 not only fixes carbon dioxide in the production process, but also further has the function of adsorbing carbon dioxide in the inside thereof and displays the function of adsorbing carbon dioxide with a lapse of time i.e. the function of slowly adsorbing carbon dioxide.

The powder 3 produced by the present embodiment, for example, can be applied as an admixture at the time of mixing concrete, asphalt paving filler, auxiliary material for soil improvers, and auxiliary material for back-filling materials or the like for tunnels or the like, and has good usability, and also a fixing material having carbon dioxide fixed therein can be utilized and used by these applications.

Therefore, the present invention not only can produce powder by effectively using the concrete sludge 2, which has been conventionally discarded as industrial waste and discharged in an amount of 3 million tons or more annually, but also is effective for countermeasures against global warming caused by carbon dioxide and also can be suitably used for CCU (Carbon dioxide Capture and Utilization) which recovers and effectively uses carbon dioxide.

As described above, according to the present embodiment, water is added to the concrete sludge 2, from which coarse aggregate and fine aggregate have been removed, with stirring by the water addition means 5 to generate the first intermediate 6, the carbon dioxide-containing gas G is supplied to the first intermediate 6 by the supply means 11 to generate the second intermediate 12, and water is drained from the second intermediate 12 by the water drain means 20 to produce the powder 3. Therefore, solid-liquid separation means, solid separation means, granular material crushing means and forced drying means, for example, are not required in the whole reaction flow. That is, the equipment investment is less, carbon dioxide can be inexpensively fixed by a simple flow at normal temperature and normal pressure, and also powder 3 having carbon dioxide fixed therein can be inexpensively produced in large quantities.

In addition, concrete sludge 2, the raw material, can be directly used without heating treatment or the like, and thus powder can be produced (carbon dioxide can be fixed) in a simple structure and steps, in which an increase in the amount of carbon dioxide discharged due to the electricity consumption required for heating is inhibited.

In the water addition means 5 (water addition step), water is added to the concrete sludge 2, from which coarse aggregate and fine aggregate have been removed and which has a water cement ratio of almost 1, in an amount of 4 times or more and 15 times or less the weight thereof. By doing this, the concrete sludge 2 can be stirred in a suitable amount of water to produce the first intermediate 6, which is supplied to the supply means 11 (supply step).

In the water drain means 20 (water drain step), water is drained from the second intermediate 12 by the own weight of the second intermediate 12, and thus it is not required to use power or the like, and an increase in the amount of carbon dioxide discharged due to electricity consumption can be inhibited when fixing carbon dioxide.

As the powder 3 produced by the carbon dioxide fixation apparatus 1 of the present embodiment, precipitated calcium carbonate with high purity cannot be obtained, and composite powder having carbon dioxide fixed therein is obtained; however, the production process is simplified, and the particle diameter is 50 um or less, three types of powder arecombined, the carbon dioxide fixed weight ratio can be also retained at about 25% of the weight, and the production volumes, which are 50 times or more the amount of precipitated calcium carbonate produced by conventional methods for producing precipitated calcium carbonate, can be obtained.

Even if the powder 3 has low purity, as long as it is used for, for example, an asphalt paving filler material or the like, the quality required can be sufficiently satisfied. That is, the powder 3 with a quality suitable for the use thereof can be inexpensively produced in large quantities and a carbon dioxide fixed material can be widely utilized and used.

From the above features, the powder can be provided more inexpensively than precipitated calcium carbonate. The present invention can be also highly evaluated as a facility and technique for utilizing and using CO₂ fixation.

### Reference Signs List

- 1: Carbon dioxide fixation apparatus
- 2: Concrete sludge
- 3: Powder
- 5: Water addition means
- 6: First intermediate
- 11: Supply means
- 12: Second intermediate
- 20: Water drain means
- G: Gas

## Claims

1. A carbon dioxide fixation apparatus, comprising
water addition part for adding water to cement paste sludge, which is concrete sludge from which coarse aggregate and fine aggregate have been removed, with stirring to obtain a first intermediate,
supply part for supplying a carbon dioxide-containing gas to the first intermediate to obtain a second intermediate, and
water drain part for draining water from the second intermediate to produce powder containing precipitated calcium carbonate, which is calcium carbonate crystals, cement carbonatized powder in which calcium components in cement particles are carbonatized on the surface of the cement particles, and unreacted cement particles.

2. The carbon dioxide fixation apparatus according to claim 1,
wherein the water addition part adds water to cement paste sludge, which is concrete sludge from which coarse aggregate and fine aggregate have been removed and which has a water cement ratio of almost 1, in an amount of 4 times or more and 15 times or less a weight thereof.

3. The carbon dioxide fixation apparatus according to claim 1 or 2,
wherein the water drain part drains water from the second intermediate by the own weight of this second intermediate.

4. A method for fixing carbon dioxide, comprising
a water addition step of adding water to cement paste sludge, which is concrete sludge from which coarse aggregate and fine aggregate have been removed, with stirring to obtain a first intermediate,
a supply step of supplying a carbon dioxide-containing gas to the first intermediate to obtain a second intermediate, and
a water drain step of draining water from the second intermediate to produce powder containing precipitated calcium carbonate, which is calcium carbonate crystals, cement carbonatized powder in which calcium components in cement particles are carbonatized on the surface of the cement particles, and unreacted cement particles.

5. The method for fixing carbon dioxide according to claim 4,
wherein in the water addition step, water is added to cement paste sludge, which is concrete sludge from which coarse aggregate and fine aggregate have been removed and which has a water cement ratio of almost 1, in an amount of 4 times or more and 15 times or less of the weight thereof.

6. The method for fixing carbon dioxide according to claim 4 or 5,
wherein in the water drain step, water is drained from the second intermediate by the own weight of this second intermediate.
